# EUROPÄISCHE PATENTSCHRIFT

(11) **EP 0 758 593 B1**
(45) Veröffentlichungstag und Bekanntmachung des Hinweises auf die Patenterteilung: **13.12.2000**
(21) Anmeldenummer: 96112757.8
(22) Anmeldetag: 08.08.1996
(51) Int. Cl.: B60N 2/36

(54) **Kraftfahrzeugsitz mit einer Sicherheitsgurt-Vorrichtung**
Automotive vehicle seat with a seat belt device
Siège de voiture automobile à dispositif de ceinture de sécurité

(30) Priorität: 12.08.1995 DE 19529836
(43) Veröffentlichungstag der Anmeldung: 19.02.1997
(73) Patentinhaber: ADAM OPEL AG, 65423 Rüsselsheim (DE)
(72) Erfinder: Baltes, Horst, Dipl.-Ing. (FH), 65439 Flörsheim (DE)
(74) Vertreter: Bergerin, Ralf, Dipl.-Ing.

(56) Entgegenhaltungen:
- DE-A- 2 928 341
- DE-A- 4 440 731
- FR-A- 2 671 318
- GB-A- 1 432 698
- GB-A- 2 191 940
- US-A- 3 734 562
- US-A- 4 257 626

## Beschreibung

Die Erfindung bezieht sich auf einen Kraftfahrzeugsitz mit einer Sicherheitsgurt-Vorrichtung, mit den im Oberbegriff des Patentanspruches 1 angegebenen Merkmalen.

Ein Kraftfahrzeugsitz ist beispielsweise aus der DE-OS 29 28 341 bekannt, bei dem zwecks Vergrößerung des Laderaums das Sitzteil und die Rückenlehne nach vorne klappbar gestaltet sind. Die Sicherheitsgurt-Vorrichtung an diesem Kraftfahrzeugsitz weist mindestens ein Gurtteil auf, welches durch eine Trennfuge zwischen der Rückenlehne und dem Sitzkissen hindurch geführt und am unteren Ende der Rückenlehne an einer mit Rahmen- oder Verstärkungsteilen der Rückenlehne winkelsteif verbundenen Halteplatte befestigt ist. Zur Verbindung mit dem Fahrzeugboden ist die Halteplatte am freien Ende mit einer hakenförmigen Umbiegung versehen, welche in der etwa vertikalen Gebrauchslage der Rückenlehne in eine Durchbrechung einer am Fahrzeugboden befestigten Ankerplatte eingreift. Bei jedem Umlegen der Rückenlehne nach vorne löst sich die Umbiegung der Halteplatte aus der Durchbrechung der Ankerplatte und bei jedem Zurückschwenken der Rückenlehne in die etwa vertikale Gebrauchslage wird diese Verbindung wieder hergestellt.

Eine derartige lösbare Verbindung zwischen der Halteplatte und der Ankerplatte kann sich jedoch nachteilig bei einem Frontalaufprall auswirken, bei dem sehr große, aus dem Gewicht des Ladegutes im Kofferraum herrührende Kräfte auf die Rückenlehne einwirken. Durch diese Einwirkung kann es selbst bei Rückenlehnen mit einer stabilen Tragstruktur zu einer Verformung mit einer geringfügigen Schwenkung der Rückenlehne nach vorne kommen, bei der die Umbiegung der Halteplatte sich aus der Durchbrechung der Ankerplatte löst. Dies hat bei dieser Ausbildung jedoch zur Folge, daß das Gurtteil nicht mehr am Fahrzeugboden verankert ist und dadurch kein sicheres Zurückhalten des Insassen auf diesem Kraftfahrzeugsitz mehr gewährleistet ist.

Weiterhin besteht bei einem solchen Kraftfahrzeugsitz die Gefahr, daß bei einem unsachgemäßen Zurückschwenken der Rückenlehne in ihre etwa vertikale Gebrauchslage oder einer Beschädigung der Halteplatte bzw. der Ankerplatte eine nicht ordnungsgemäße Verbindung zwischen der Rückenlehne bzw. dem Gurtteil und der Ankerplatte zustande kommt.

Aus der US-A-4 257 626 ist ein Kraftfahrzeugsitz mit den Merkmalen des Oberbegriffs des Anspruchs 1 bekannt, der mit einem Sicherheitsgurt ausgerüstet ist und bei dem die Rückenlehne in ihrer Normal- oder Ausgangslage mit einem Anschlag an einem fahrzeugfesten Gestellteil anliegt. Gegen diesen Anschlag ist die Rückenlehne durch eine Feder vorgespannt, die das untere Ende der Rückenlehne mit dem Fahrzeugboden verbindet. Diese Feder ist jedoch so ausgebildet, dass ihre Kraft erst bei einem Aufprall des Fahrzeuges gegen ein Hindernis, nicht jedoch bei normalen und starken Fahrzeugabbremsungen überwunden wird. Die Feder soll somit eine Verlagerung zumindest des unteren Endes der Rückenlehne nach vorne bei einem Frontalaufprall ermöglichen, wobei diese Bewegung der Rückenlehne zur Spannung des Sicherheitsgurtes bzw. zur Beseitigung der Gurtlose verwendet wird.

Der vorliegenden Erfindung liegt demnach die Aufgabe zugrunde, einen gattungsgemäßen Kraftfahrzeugsitz derart weiterzubilden, daß im Falle eines Frontalaufpralls die Verletzungsgefahr für einen angegurteten Insassen durch die im Laderaum befindlichen Gegenstände reduziert wird.

Diese Aufgabe wird erfindungsgemäß durch die im Kennzeichen des Patentanspruches 1 angegebenen Merkmale gelöst. Vorteilhafte Weiterbildungen der Erfindung sind in den Unteransprüchen angegeben.

Bei der erfindungsgemäßen Ausbildung ist im Vergleich zu der bekannten Lösung das untere Ende der Rückenlehne nicht mehr mittels einer starren Halteplatte mit dem Fahrzeugboden verbunden, sondern diese Verbindung ist durch ein flexibles, auf Zug belastbares Glied, beispielsweise ein Gurtband, gebildet, welches mit einem Ende an der Tragstruktur der Rückenlehne und mit dem anderen Ende am Fahrzeugboden, im Bereich des Verankerungspunktes für das Gurtteil der Sicherheitsgurt-Vorrichtung befestigt ist. Ein besonderer Vorteil dieser Ausbildung besteht darin, daß das Gurtteil beim Umklappen der Rükkenlehne nicht aus der Verankerung am Fahrzeugboden gelöst wird. Dadurch ist eine zuverlässige Zurückhaltung des Insassen im Falle eines Frontalaufpralles gewährleistet.

Sollte bei einem Frontalaufprall durch die Einwirkung der im Laderaum befindlichen Gegenstände das untere Ende der Rückenlehne deformiert und teilweise nach vorne verschoben werden, so wird durch das Gurtband ein Teil der kinetischen Energie zur Verformung des Fahrzeugbodens im Bereich des Verankerungspunktes umgeleitet. Bei dieser Verformung wird der Verankerungspunkt zusammen mit dem Gurtteil entsprechend der Verschiebung des unteren Endes der Rückenlehne nach vorne verschoben, wodurch sich auch der mit dem Gurtteil verbundene Sicherheitsgurt nach vorne verschiebt. Die Gefahr eines Einklemmens des Insassen zwischen dem Sicherheitsgurt und der Rückenlehne wird somit vermieden.

Die Erfindung beschränkt sich nicht auf einen im Fond eines Kraftfahrzeuges angeordneten Kraftfahrzeugsitz mit einer einteiligen Rückenlehne. Die Erfindung kann für jeden Kraftfahrzeugsitz mit einer Sicherheitsgurt-Vorrichtung vorgesehen sein, bei dem ein Ende der Sicherheitsgurt-Vorrichtung am Fahrzeugboden verankert ist. Bei der Verbindung dieses Verankerungspunktes mittels eines flexiblen Gurtbandes mit dem unteren Ende der Rückenlehne wird die Gefahr der Verletzung des angegurteten Insassen bei einem Frontalaufprall durch die im Laderaum befindlichen Gegenstände wesentlich reduziert.

Die Erfindung wird anhand der Zeichnung näher erläutert. Diese zeigt teilweise schematisch in
- Fig. 1: eine Seitenansicht eines Kraftfahrzeugsitzes mit einer nach vorne klappbaren Rükkenlehne;
- Fig. 2: eine Seitenansicht des Kraftfahrzeugsitzes gemäß Fig. 1, mit einem angegurteten Insassen;
- Fig. 3: eine alternative Ausbildung der flexiblen Verbindung zwischen der Rückenlehne und dem Fahrzeugboden;
- Fig. 4: eine Ansicht der Verbindung gemäß Pfeil A in Fig. 3.

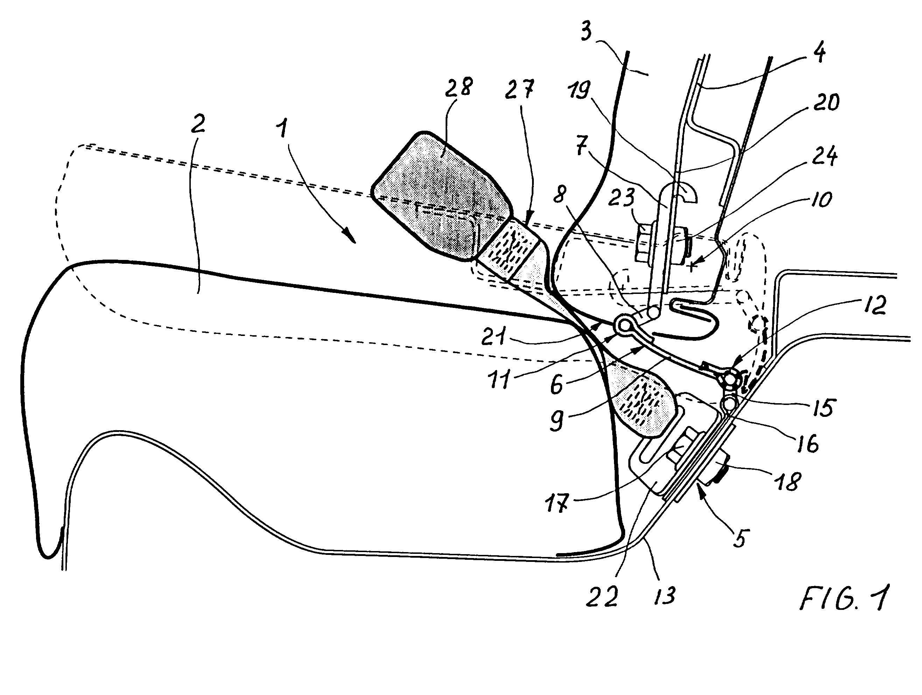

In Fig. 1 ist ein im Fond eines Kraftfahrzeuges angeordneter Kraftfahrzeugsitz 1 dargestellt, welcher aus einem Sitzkissen 2 und einer Rückenlehne 3 besteht. Die Rückenlehne 3 ist einteilig ausgebildet und auf eine nicht näher dargestellte Weise um eine in Fahrzeugquerrichtung gestellte Achse 10 schwenkbar gelagert. Am Kraftfahrzeugsitz 1 ist weiterhin eine Sicherheitsgurt-Vorrichtung vorgesehen, wovon in Fig. 1 nur ein kurzes Gurtteil 27 mit einem Gurtschloß 28 gezeigt ist. Das Gurtteil 27 ist durch einen Spalt zwischen der Rückenlehne 3 und dem Sitzkissen 2 hindurch geführt und an einer Befestigungslasche 22 befestigt, welche am Verankerungspunkt 5 mit dem Fahrzeugboden 13 verbunden ist.

Am unteren Ende der Rückenlehne 3 ist ein mit deren Tragstruktur 4 verbundenes bügelförmiges Teil 7 vorgesehen, welches an einem Ende im Bereich der unteren Kontur 21 der Rückenlehne 3 eine Öse 8 zur Aufnahme eines Gurtbandes 9 aufweist. Am anderen Ende ist das bügelförmige Teil 7 mit einem Haken 19 zum Fixieren an einer Öffnung 20 in der Tragstruktur 4 ausgebildet, wobei zur Befestigung an der Tragstruktur 4 eine Schraubverbindung (Schraube 23, Mutter 24) vorgesehen ist. Das Gurtband 9 ist einerseits unter Bildung einer Schlaufe 11 an der Öse 8 und andererseits, ebenfalls unter Bildung einer Schlaufe 12 an einer Öse 15 befestigt, welche ihrerseits mit einer am Verankerungspunkt 5 mit dem Fahrzeugboden 13 verbundenen Ankerplatte 16 drehbar verbunden ist. Zur drehbaren Verbindung mit der Öse 15 greift die Ankerplatte 16 mit einem Ende in die Öse 15 ein und umschlingt dabei formschlüssig ein Teil dieser Öse 15. Die Ankerplatte 16 ist gemeinsam mit der Befestigungslasche 22 am Fahrzeugboden 13 mittels einer Schraubverbindung (Schraube 17, Mutter 18) befestigt.

Bei der Verbindung mit dem bügelförmigen Teil 7 umschlingt das entsprechende Ende des Gurtbandes 9 ein Teil der Öse 8, wobei eine Schlaufe 11 gebildet wird. Die Befestigung an der Ankerplatte 16 erfolgt auf ähnliche Weise, indem das bodenseitige Ende des Gurtbandes 9 unter Bildung einer Schlaufe 12 ein Teil der Öse 15 umschlingt. Die Länge des Gurtbandes 9 ist dabei so bemessen, daß die Rückenlehne 3 um die Achse 10 frei schwenken kann. In Fig. 1 sind die nach vorne umgelegte Rückenlehne 3 und die entsprechende Lage des Gurtbandes 9 mit unterbrochenen Linien gezeichnet.

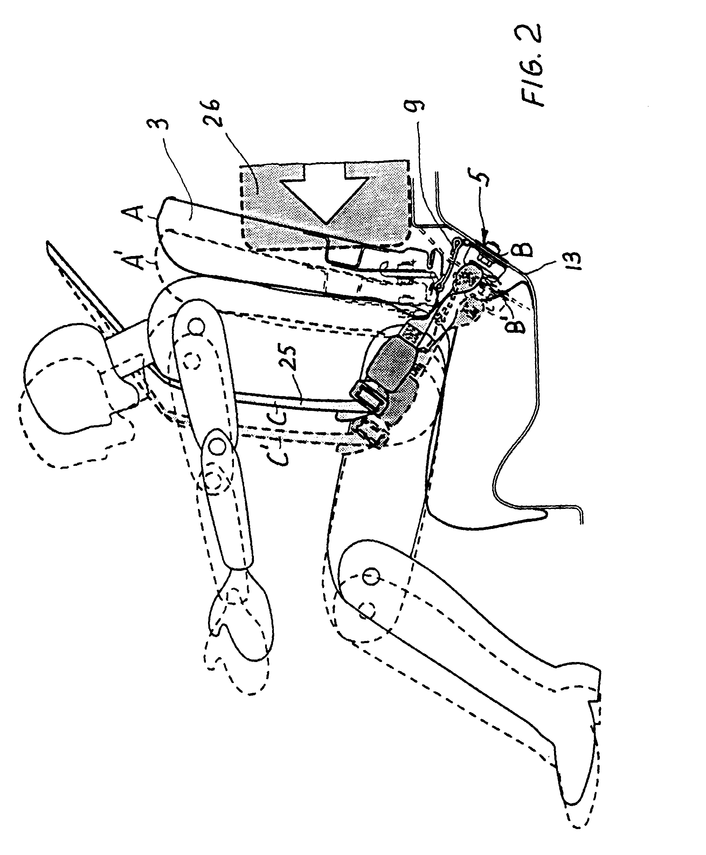

Aus Fig. 2 ist die Wirkungsweise des erfindungsgemäßen Kraftfahrzeugsitzes 1 im Falle eines Frontalaufpralls ersichtlich, bei dem die Rückenlehne 3 durch die im Laderaum befindlichen Gegenstände 26 von der Gebrauchslage A in die nach vorne verschobene Position A' verlagert wird. Da das untere Ende der Rückenlehne 3 mittels des Gurtbandes 9 mit dem Verankerungspunkt 5 verbunden ist, wird ein Teil der kinetischen Energie zur Verformung des Fahrzeugbodens 13 umgeleitet, welcher im Bereich des Verankerungspunktes 5 nachgiebig gestaltet ist. Dabei wird der Verankerungspunkt 5 von einer Position B in eine Position B' verlagert. Dies bewirkt, daß auch der Sicherheitsgurt 25 von einer Position C in eine Position C' nach vorne verschoben wird. Durch diese Verschiebungen, welche in Fig. 2 mit unterbrochenen Linien dargestellt sind, wird die Gefahr des Einklemmens des Insassen zwischen dem Sicherheitsgurt 25 und der Rückenlehne 3 zumindest im unteren Bereich der Rückenlehne 3 wesentlich reduziert.

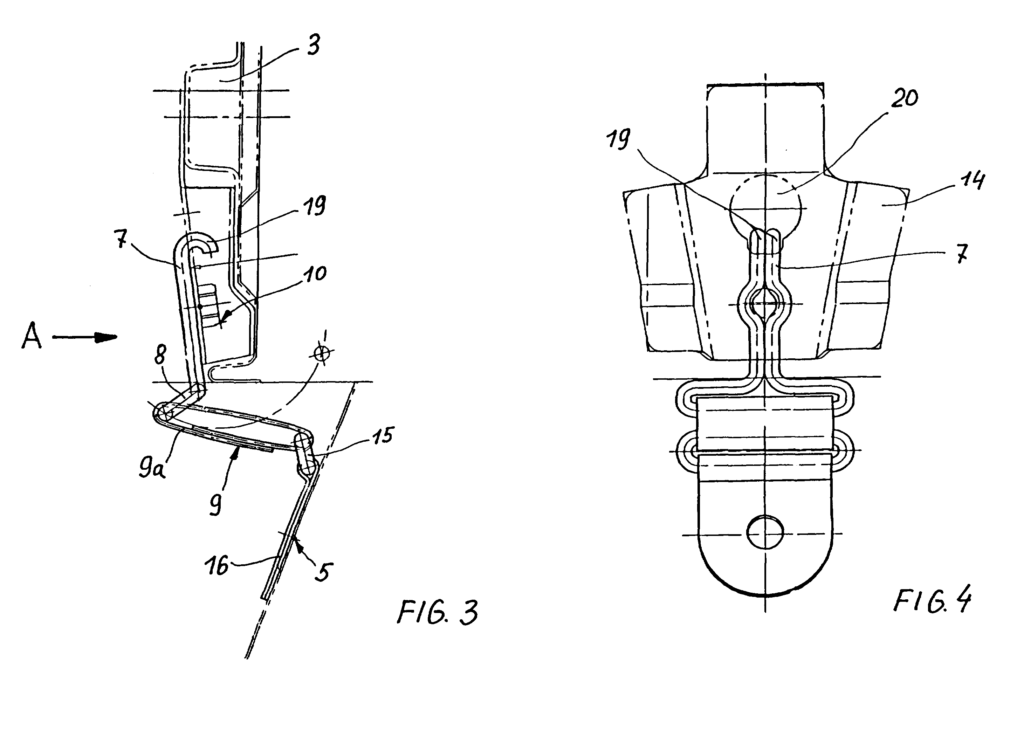

In Fig. 3 ist eine alternative Ausführung der Verbindung zwischen dem unteren Ende der Rückenlehne 3 und dem Verankerungspunkt 5 dargestellt, bei der das Gurtband 9 als ein endloses Band 9a ausgebildet und in der Öse 8 des bügelförmigen Teils 7 sowie in der mit der Ankerplatte 16 verbundenen Öse 15 geführt ist. Die Spannweite des endlosen Bandes 9a ist dabei so bemessen, daß dieses die Schwenkung der Rückenlehne 3 um die Achse 10 nicht behindert. Das endlose Band 9a ist in der Herstellung sehr einfach. Es kann aber im Falle eines Frontalaufpralls höhere Zugkräfte übertragen, als das Gurtband 9 in der Ausführung nach Fig. 1 und 2.

Die Fig. 4 zeigt eine Ansicht gemäß Pfeil A in Fig. 3, in der das Fixieren und die Befestigung des bügelförmigen Teils 7 an einem Verstärkungsteil 14 der nicht dargestellten Tragstruktur 4 ersichtlich ist. Das Verstärkungsteil 14 ist dabei zur Aufnahme des bügelförmigen Teils 7 ausgebildet und soll die Festigkeit der Tragstruktur 4 in diesem Bereich erhöhen. Das Fixieren des bügelförmigen Teils 7 erfolgt zunächst durch das Einhängen des Hakens 19 in die Öffnung 20, welche am Verstärkungsteil 14 vorgesehen ist. Danach kann das bügelförmige Teil 7 mittels der nicht dargestellten Schraubverbindung im Bereich der Bohrung 29 am Verstärkungsteil 14 mit diesem verbunden werden. Das Fixieren des bügelförmigen Teils 7 an der Öffnung 20 erleichtert dessen Montage an der Tragstruktur 4 und ermöglicht eine höhere Zugbelastung im Falle eines Frontalaufpralls.

## Patentansprüche

1. Kraftfahrzeugsitz (1) mit einer Sicherheitsgurt-Vorrichtung und mindestens einer schwenkbaren Rückenlehne (3), wobei die Sicherheitsgurt-Vorrichtung mindestens ein mit dem Fahrzeugboden (13) verankertes Gurtteil (27) aufweist und die Rückenlehne (3) mindestens in der annähernd vertikalen Gebrauchslage mit ihrem unteren Ende mit dem Fahrzeugboden (13) verbunden ist, wobei die Verbindung zwischen dem unteren Ende der Rückenlehne (3) und dem Fahrzeugboden (13) im wesentlichen durch ein flexibles, auf Zug belastbares Glied (6) gebildet ist, dadurch gekennzeichnet, daß bei einem Frontalaufprall die durch die Einwirkung von im Laderaum befindlichen Gegenständen erzeugte kinetische Energie durch das auf Zug belastbare Glied (6) zur Verformung des Fahrzeugbodens indenselben umgeleitet wird.

2. Kraftfahrzeugsitz nach Anspruch 1, **dadurch gekennzeichnet**, daß das flexible, auf Zug belastbare Glied (6) mit einem Ende an der Tragstruktur (4) der Rükkenlehne (3) und mit dem anderen Ende am Verankerungspunkt (5) des Gurtteils (27) befestigt ist.

3. Kraftfahrzeugsitz nach Anspruch 1 oder 2, **dadurch gekennzeichnet**, daß das flexible, auf Zug belastbare Glied (6) durch ein Gurtband (9) gebildet ist.

4. Kraftfahrzeugsitz nach einem der Ansprüche 1 bis 3, **dadurch gekennzeichnet**, daß das Gurtband (9) mit seinem rückenlehnenseitigen Ende an einem mit der Tragstruktur (4) verbundenen bügelförmigen Teil (7) gehaltert ist.

5. Kraftfahrzeugsitz nach Anspruch 4, **dadurch gekennzeichnet**, daß das bügelförmige Teil (7) einen Haken (19) zum Fixieren an einer Öffnung (20) in der Tragstruktur (4) aufweist und mittels einer Schraubverbindung (Schraube 23, Mutter 24) mit der Tragstruktur (4) verbunden ist.

6. Kraftfahrzeugsitz nach Anspruch 4 oder 5, **dadurch gekennzeichnet**, daß am bügelförmigen Teil (7) eine Öse (8) zur Aufnahme des Gurtbandes (9) vorgesehen ist.

7. Kraftfahrzeugsitz nach einem der Ansprüche 1 bis 3, **dadurch gekennzeichnet,** daß das Gurtband (9) am Verankerungspunkt (5) in einer mit dem Fahrzeugboden (13) verbundenen Öse (15) gehaltert ist.

8. Kraftfahrzeugsitz nach Anspruch 7, **dadurch gekennzeichnet**, daß die Öse (15) an einer Ankerplatte (16) drehbar gelagert ist, welche gemeinsam mit einer Befestigungslasche (22) für ein Gurtteil (27) der Sicherheitsgurt-Vorrichtung am Fahrzeugboden (13) befestigt ist.

9. Kraftfahrzeugsitz nach Anspruch 8, **dadurch gekennzeichnet**, daß die Ankerplatte (16) mit einem Ende in die Öse (15) eingreift und dabei ein Teil der Öse (15) formschlüssig umschlingt.

10. Kraftfahrzeugsitz nach einem der Ansprüche 3, 4, 6 oder 7, **dadurch gekennzeichnet**, daß das Gurtband (9) unter Bildung einer Schlaufe (11 bzw. 12) an der Öse (8) des bügelförmigen Teils (7) und/oder an der mit der Ankerplatte (16) verbundener Öse (15) befestigt ist.

11. Kraftfahrzeugsitz nach einem der Ansprüche 3, 4, 6 oder 7, **dadurch gekennzeichnet**, daß das Gurtband (9) als ein endloses Band (9a) ausgebildet ist, welches in der Öse (8) des bügelförmigen Teils (7) und in der mit der Ankerplatte (16) verbundener Öse (15) geführt ist.

## Claims

1. Motor vehicle seat (1) with a safety belt device and at least one pivotable back rest (3), wherein the safety belt device has at least one belt part (27) anchored to the vehicle floor (13) and the back rest (3) in at least the approximately vertical position of usage is connected with its lower end to the vehicle floor (13), wherein the connection between the lower end of the back rest (3) and the vehicle floor (13) is formed essentially by a flexible member (6) which can be stressed by pulling, characterised in that during a frontal impact the kinetic energy produced by the effect of the objects situated in the luggage space is diverted into the vehicle floor so as to deform the same by the member (6) which can be stressed by pulling.

2. Motor vehicle seat according to claim 1, characterised in that the flexible member (6) which can be stressed by pulling is secured with one end on the support structure (4) of the back rest (3) and with the other end on the anchoring point (5) of the belt part (27).

3. Motor vehicle seat according to claim 1 or 2,
characterised in that the flexible member (6) which can be stressed by pulling is formed by a belt (9).

4. Motor vehicle seat according to one of the claims 1 to 3, characterised in that the belt (9) with its end facing the back rest is held by a bracket-like part (7) connected to the support structure (4).

5. Motor vehicle seat according to claim 4, characterised in that the bracket-like part (7) has a hook (19) for fixing to an opening (20) in the support structure (4) and is connected by means of a screw connection (screw 23, nut 24) to the support structure (4).

6. Motor vehicle seat according to claim 4 or 5,
characterised in that on the bracket-like part (7) there is provided an eyelet (8) for receiving the belt (9).

7. Motor vehicle seat according to one of the claims 1 to 3, characterised in that the belt (9) is held by an anchoring point (5) in an eyelet (15) connected to the vehicle floor (13).

8. Motor vehicle seat according to claim 7, characterised in that the eyelet (15) is rotatably mounted in an anchoring plate (16) which collectively with a securing bracket (22) for a belt part (27) of the safety belt device is secured to the vehicle floor (13).

9. Motor vehicle seat according to claim 8, characterised in that the anchoring plate (16) with one end engages in the eyelet (15) and in so doing loops around one part of the eyelet (15) in an interlocking manner.

10. Motor vehicle seat according to one of the claims 3, 4, 6 or 7, characterised in that by forming a loop (11 or 12) the belt (9) is secured in the eyelet (8) of the bracket-like part (7) and/or the eyelet (15) connected to the anchoring plate (16).

11. Motor vehicle seat according to one of the claims 3, 4, 6 or 7, characterised in that the belt (9) is constructed as an endless belt (9a) which is guided in the eyelet (8) of the bracket-like part (7) and in the eyelet (15) connected to the anchoring plate.

## Revendications

1. Siège (1) de véhicule automobile comportant un système de ceinture de sécurité et au moins un dossier (3) pivotant, le système de ceinture de sécurité comprenant au moins une partie de ceinture (27) fixée au plancher de véhicule (27) et le dossier (3), au moins dans sa position d'utilisation sensiblement verticale, étant lié au niveau de son extrémité inférieure au plancher de véhicule (13), la liaison entre l'extrémité inférieure du dossier (3) et le plancher de véhicule (13) étant formée essentiellement d'un élément (6) souple, travaillant en traction, caractérisé en ce que, lors d'une collision frontale, l'énergie cinétique engendrée par l'action des objets placés dans l'espace à bagages est transmise au plancher de véhicule par l'intermédiaire de l'élément (6) travaillant en traction aux fins de déformer ledit plancher de véhicule.

2. Siège de véhicule automobile selon la revendication 1, caractérisé en ce que l'élément (6) souple, travaillant en traction, est fixé par l'une de ses extrémités à l'ossature (4) du dossier (3) et par son autre extrémité au point d'ancrage (5) de la partie de ceinture (27).

3. Siège de véhicule automobile selon la revendication 1 ou 2, caractérisé en ce que l'élément (6) souple, travaillant en traction, est formé d'une sangle (9) de ceinture.

4. Siège de véhicule automobile selon une des revendications 1 à 3, caractérisé en ce que la sangle (9) de ceinture, par son extrémité côté dossier, est fixée à un élément (7) en forme d'étrier lié à l'ossature (4).

5. Siège de véhicule automobile selon la revendication 4, caractérisé en ce que l'élément (7) en forme d'étrier comporte un crochet (19) permettant sa fixation à une ouverture (20) dans l'ossature (4) et est lié à l'ossature (4) au moyen d'une liaison vissée (vis 23, écrou 24).

6. Siège de véhicule automobile selon la revendication 4 ou 5, caractérisé en ce qu'un oeillet (8) est prévu dans l'élément (7) en forme d'étrier pour recevoir la sangle de ceinture (9).

7. Siège de véhicule automobile selon une des revendications 1 à 3, caractérisé en ce que la sangle de ceinture (9), au point d'ancrage (5), est fixée dans un oeillet (15) lié au plancher de véhicule (13).

8. Siège de véhicule automobile selon la revendication 7, caractérisé en ce que l'oeillet (15) est monté tournant sur une plaque d'ancrage (16) qui, avec une patte de fixation (22) pour une partie de ceinture (27) du système de ceinture de sécurité, est fixée au plancher (13) de véhicule.

9. Siège de véhicule automobile selon la revendication 8, caractérisé en ce que la plaque d'ancrage (16) pénètre avec une extrémité dans l'oeillet (15) et entoure avec complémentarité de formes une partie dudit oeillet (15).

10. Siège de véhicule automobile selon une des revendications 3, 4, 6 ou 10, caractérisé en ce que la sangle de ceinture (9) est fixée en formant une boucle (11 ou 12) à l'oeillet (8) de l'élément (7) en forme d'étrier et/ou à l'oeillet (15) lié à la plaque d'ancrage (16).

11. Siège de véhicule automobile selon une des revendications 3, 4, 6 ou 7, caractérisé en ce que la sangle de ceinture (9) est réalisée sous la forme d'une sangle sans fin (9a) qui passe dans l'oeillet (8) de l'élément (7) en forme d'étrier et dans l'oeillet (15) lié à la plaque d'ancrage (16).
